# EUROPÄISCHE PATENTSCHRIFT

(11) **EP 2 158 958 B1**
(45) Veröffentlichungstag und Bekanntmachung des Hinweises auf die Patenterteilung: **24.12.2014**
(21) Anmeldenummer: 09168696.4
(22) Anmeldetag: 26.08.2009
(51) Int. Cl.: B01D 65/02, B01D 61/22, C02F 1/44, C02F 1/00

(54) **Einrichtung und Verfahren zum Rückspülen von Filtermembranmodulen**
Device and method for backwashing filter membrane modules
Dispositif et procédé destiné au lavage à contre courant de modules membranaires

(30) Priorität: 26.08.2008 DE 102008039676
(43) Veröffentlichungstag der Anmeldung: 03.03.2010
(73) Patentinhaber: Inge Watertechnologies AG, 86926 Greifenberg (DE)
(72) Erfinder: Berg, Peter, 86919, Utting (DE); Winkler, Roland, 86899, Landsberg (DE)
(74) Vertreter: Kietzmann, Lutz

(56) Entgegenhaltungen:
- EP-A1- 0 669 159
- EP-A1- 1 743 690
- US-A- 4 708 790
- US-A- 6 001 254

## Beschreibung

Die vorliegende Erfindung betrifft eine Einrichtung sowie ein Verfahren zum Rückspülen von Filtermembranmodulen, die in Form mehrerer Modulreihen parallel geschaltet innerhalb eines Modulracks angeordnet sind und über je stirnseitige Zulauf-/Ablaufanschlüsse über je zugeordnete Zulauf-/Ablaufleitungen mit Rohwasser versorgbar sind, und je einen wandseitigen Ablaufanschluss für das Filtrat aufweisen, an denen eine Filtratssammelleitung zum Abführen des Filtrats angeschlossen ist, wobei Ventilmittel zur Steuerung mindestens eines Filtrations- und Rückspülungsmodus vorgesehen sind.

Bevorzugtes Einsatzgebiet der hier interessierenden in Modulracks zusammengefasst angeordneten Filtermembranmodule sind Einrichtungen der Wasser- und Abwasseraufbereitung oder auch Industrieanlagen. Durch die Filtration werden je nach eingesetztem Membrantyp verunreinigte Flüssigkeiten - insbesondere Wasser - von Partikeln. Je nach Membrantyp oder Vorbehandlung ist auch eine Abtrennung gelöster Stoffe möglich. Das Filtrationsverfahren ist einfach und sicher durchzuführen, ohne Zusatz von Chemikalien und mit geringem Energieaufwand. Zum Einsatz hierfür kommen so genannte Filtermembranmodule, welche üblicherweise aus länglichen Hohlzylindern als Gehäuse bestehen, die zur Unterbringung von Filtrationsmembranen dienen. Moderne Filtrationsmembranen besitzen beispielsweise mehrere einzelne poröse Kapillar- oder Flachmembranen.

Die zu filtrierende Flüssigkeit, hier als Rohwasser bezeichnet, wird im Fall von Kapillarmembranen in diese hineingepresst. Durch die porösen Wandungen dringt dann die filtrierte Flüssigkeit, hier als Filtrat bezeichnet, hindurch. Ein Filtermembranmodul enthält ein Bündel vieler einzelner solcher Filtrationsmembranen. In der Regel wird das Filtermembranmodul in ein aus diversen Zulauf- und Ablaufleitungen bestehendes Rohrleitungssystem eingebunden, durch welches die zu filtrierende Flüssigkeit fließt.

Zur Dimensionierung der zur Filtration erforderlichen Membranfilterfläche an einen vorgegebenen Durchfluss werden mehrere Filtermembranmodule parallel geschaltet. Dies geschieht in so genannten Modulracks als Trägerkonstruktion. Die Modulracks sind Gestelle zur Aufnahme der Filtrationsmodule sowie deren Rohrleitungssystem. Insbesondere bei der hier interessierenden Ultra- und Mikrofiltration werden die die porösen Filtrationsmembrane enthaltenden Filtermembranmodule in bestimmten Zeitabständen mit zuvor produziertem Filtrat zurückgespült, um die an den Filtrationsmembranen haftenden Verunreinigungen abzulösen und durchzuspülen. Dazu wird zuvor filtriertes Wasser gesammelt.

Aus der JP 10323544 geht eine gattungsgemäße Einrichtung zum Rückspülen von Filtermembranmodulen hervor. Bei dieser Einrichtung ist ein externer Rückspülbehälter vorgesehen, in dem zuvor filtriertes Wasser gesammelt wird. Aus diesem wird mit Hilfe von Druckluft das Wasser entgegen der Filterrichtung durch die Filtrationsmodule gepresst. Nachteilig ist hierbei, dass der Rückspülbehälter als zusätzliches Bauteil anfällt und einen entsprechenden Bauraum beansprucht. Außerdem unterliegt ein derartiger Rückspülbehälter einer Verkeimungsgefahr, wenn das hierin bevorratete Filtrat längere Zeit steht.

Die DE 10 2005 032 286 A1 offenbart eine alternative Ausführungsform für eine Einrichtung zum Rückspülen von Filtermembranmodulen, welche in gattungsgemäßer Übereinstimmung hier in Modulracks angeordnet sind. Es sind mehrere in Reihe angeordnete einzelne Filtermembranmodule vorgesehen, an deren beiden Stirnseiten je ein Zulauf für die zu filtrierende Flüssigkeit angeordnet ist. Die jeweils stirnseitig angeordneten Zuläufe werden ausgehend von sich quer zur Verlaufsrichtung der einzelnen Filtermembranmodule und längs des Modulracks erstreckende Sammelleitungen gespeist. Die zu filtrierende Flüssigkeit wird in diese oberhalb und unterhalb der Filtrationsmodule verlaufenden Sammelleitungen gepumpt und durch die Filtermembranmodule gepresst. Jedes Filtermembranmodul weist weiterhin mindestens einen Ablauf für das Filtrat auf, welche gemeinsam in einer oben liegenden Filtratsammelleitung münden. Von dieser Filtratsammelleitung aus wird die gereinigte Flüssigkeit weiter abgeleitet.

Für das Rückspülen ist ein außerhalb des Modulracks angeordneter Rückspülbehälter und zahlreiche weitere Aggregate, wie Rückspülpumpe, Ventile, Steuerung, Messaufnehmer erforderlich. Insbesondere stellt die Rückspülpumpe ein recht aufwendiges Bauteil dar. Eine weitere Problematik ist auch hier die Gefahr einer Verschmutzung und Verkeimung des Rückspülbehälters aufgrund des oft hierin stehenden Wassers.

Aus der US 4 708 790 A geht ferner eine Einrichtung zum Rückspülen von Filtermembranmodulen hervor, bei welcher mehrere Filtermembranmodule parallel geschaltet sind und über je stirnseitig angeordnete Zulaufleitungen mit Rohwasser oder Spülwasser beaufschlagbar sind. Das zum Rückspülen genutzte Spülwasser wird auch hier einem separaten Behälter entnommen.

Aus der US 6,001,254 geht eine technische Lösung hervor, welche zur Rückspülung ohne Rückspülbehälter auskommt. Hierbei werden einzelne Filtermembranmodule, welche nicht in Form mehrerer parallel geschalteter Modulreihen innerhalb eines Modulracks angeordnet sind, nacheinander mit dem Filtrat anderer Filtermembranmodule rückgespült, in dem jedes Filtermembranmodul zum Zeitpunkt seiner Rückspülung vereinzelt wird. Hierbei wird mit Hilfe eines Wasserzählers und Druckfühlern die Durchlässigkeit bei der Rückspülung des so vereinzelten Filtermembranmoduls und die Durchlässigkeit beim Betrieb des Rests der Filtermembranmodule bestimmt, um eine Diagnose hinsichtlich Periodizität erforderlicher Rückspülungen, Auslaugung der Filtermembranmodule und Betriebsanomalien treffen zu können.

Aus der EP 0 669 159 A1 geht ferner ein druckluftunterstütztes Verfahren zum Rückspülen eines Filtermembranmoduls hervor.

Es ist die Aufgabe der vorliegenden Erfmdung eine Einrichtung zum Rückspülen von mehreren in der Bauform eines Modulracks parallel geschalteten Filtermembranmodulen zu schaffen, bei der/dem mit geringem gerätetechnischen Aufwand ein verkeimungsgefahrfreies Rückspülen sichergestellt werden kann.

Die Aufgabe wird von einer Einrichtung gemäß Anspruch 1 und einem Verfahren gemäß Anspruch 6 gelöst. Die jeweils rückbezogenen abhängigen Ansprüche geben vorteilhafte Weiterbildungen der Erfindung wieder.

Die Erfmdung schließt die technische Lehre ein, dass im Rückspülmodus das zulaufseitige Steuerventil der Rohwasser führenden ersten Zulauf-/Ablaufleitung einer Modulreihe geschlossen ist, jedoch das zugeordnete ablaufseitige Steuerventil der zum Ablauf von Rückspülwasser dienenden zweiten Zulauf-/Ablaufleitung derselben Modulreihe sowie die zulaufseitigen Steuerventile in der Rohwasser führenden Zulaufleitung der übrigen Modulreihen geöffnet sind, um eine Rückspülung der einen Modulreihe des Modulracks durch das gleichzeitig von den anderen Modulreihen erzeugte Filtrat zu gewährleisten.

Der Vorteil der erfindungsgemäßen Lösung liegt insbesondere darin, dass auf einen Rückspülbehälter mit dazu gehöriger Rückspülpumpe verzichtet werden kann. Denn während des Rückspülmodus werden mit Ausnahme der rückzuspülenden Modulreihe die übrigen Modulreihen im Filtrationsmodus betrieben, so dass diese Filtrat erzeugen, dass unmittelbar zur Rückspülung der in den Rückspülmodus geschalteten Modulreihe genutzt wird. Vorzugsweise wird jede Modulreihe des Modulracks nacheinander, also abwechselnd, rückgespült, um am Ende eines solchen Durchlaufs die Reinigung aller Filtermembranmodule vollzogen zu haben. Dabei ist es optimal, wenn im Verbund von vier Modulreihen drei Modulreihen eine Modulreihe abwechselnd durchspülen. Durch diese in steuerungstechnischer Weise einfach umzusetzende Maßnahme lässt sich mit wenig Aufwand eine zuverlässige Rückspülung des gesamten Modulracks durchführen. Es sind hierfür lediglich die innerhalb des Rohrleitungssystems enthaltenen Steuerventile entsprechend koordiniert anzusteuern. Insgesamt gestattet die erfindungsgemäße Lösung eine sehr kompakte Bauweise eines rückspülbaren Modulracks und es ist gegenüber herkömmlichen Lösungen auch weniger Verrohrungsaufwand erforderlich. Unmittelbar im Zulauf des Rückspülwassers können auch Chemikalien zur Unterstützung der Reinigung dosiert werden. Das Rückspülen kann auch wechselseitig im Modul ausgeführt werden, um die Reinigungseffizienz weiter zu steigern.

Um die erfindungsgemäßen Filtrations- und Rückwärtsspülungsmodi in technisch einfacher Weise durchführen zu können, wird gemäß einer die Erfindung verbessernden Maßnahme vorgeschlagen, dass die in die Rohwasser führenden Zulauf-/Ablaufleitungen sowie in die Filtratsammelleitung pro Modulreihe eingesetzten zu- und ablaufseitigen Steuerventile als elektromagnetisch betätigte 2/2-Wegeventile ausgebildet sind. Durch die elektromagnetische Betätigung lassen sich diese Steuerventile an eine vorzugsweise zentrale elektronische Steuereinheit anschließen, um nach Maßgabe von hierin vorzugsweise softwaretechnisch hinterlegten Filtrations- und Rückspülungsmodi die Ventilschaltung durchzuführen. Daneben ist es auch möglich, zumindest im Notbetrieb, die Steuerventile mit einer Handhilfsbetätigung auszustatten, um bei Ausfall der elektrischen Steuerung in den normalen Betriebsmodus zu wechseln.

Während des normalen Filtrationsmodus wird vorzugsweise jede Modulreihe des Modulracks über eine Zulauf-/Ablaufleitung mit Rohwasser beaufschlagt, wobei abflussseitig das erzeugte Filtrat über die Filtratsammelleitung abgeführt wird.

Es wird vorgeschlagen, endseitig der Filtratsammelleitung ein zentrales Filtratventil vorzusehen, um einen einfachen Austausch weiterführender Leitungen und dergleichen vornehmen zu können.

Gemäß der Erfindung ist eine Umschaltventileinrichtung vorgesehen, mittels welcher die Rohwasser führende Zulauf-/Ablaufleitung der ersten sowie auch der zweiten - an gegenüberliegenden Enden der Filtermembranmodule - stirnseitig angeordneten Zulauf-/Ablaufanschlüsse mit einem Zentralzulauf des Modulracks für Rohwasser oder mit einem Zentralablauf des Modulracks für Rückspülwasser verbindbar ist. Hierdurch besteht die Möglichkeit, die Filtermembranmodule über beide Zulauf-/Ablaufanschlüsse entweder mit Rohwasser zur Filtration zu beaufschlagen, oder hieraus das durch die Rückspülung entstehende verunreinigte Rückspülwasser abzuleiten. Je nach gewähltem Betriebsmodus kann der Zulauf-/Ablaufanschluss eines Filtermembranmoduls somit für den Zulauf von Rohwasser oder den Ablauf von verunreinigtem Rückspülwasser genutzt werden. Es sind auch andere Betriebsmodi denkbar.

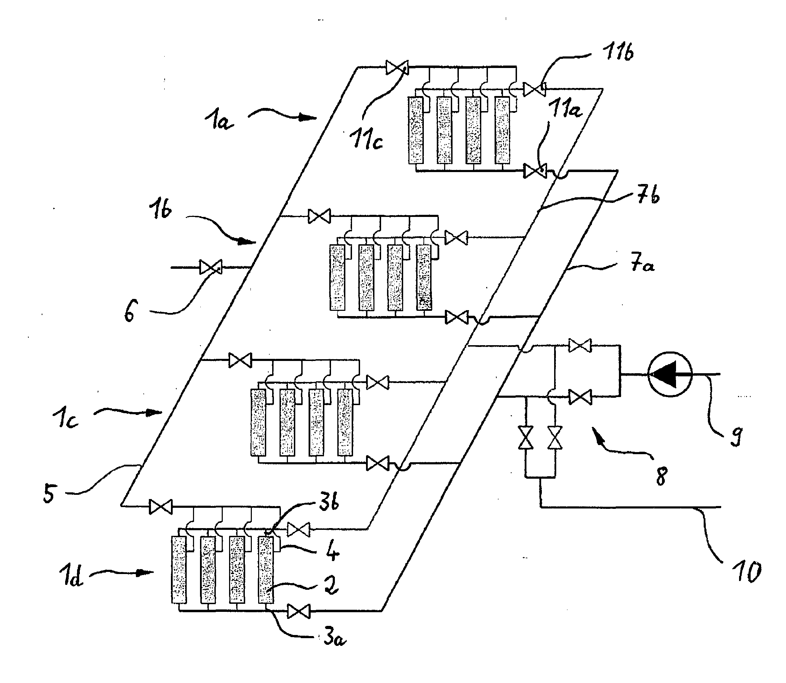

Die vorstehend erwähnte Umschaltventileinrichtung kann aus vier einzelnen 2/2-Wegeventilen aufgebaut sein, die mit einem entsprechend verzweigten Rohrleitungssystem zur Umsetzung der erwähnten Betriebsmodi verschaltet sind. Vorzugsweise ist die Umschaltventileinrichtung jedoch als ein einziges elektromagnetisch betätigtes 4/2-Wegeventil ausgebildet, mit welchem die Umschaltung durch die beiden vorgegebenen Schaltpositionen durchführbar ist. Die elektromagnetische Betätigung gewährleistet auch hier die Ansteuerung von einer zentralen elektronischen Steuereinheit aus. Weitere, die Erfindung verbessernde Maßnahmen werden nachstehend gemeinsam mit der Beschreibung eines bevorzugten Ausführungsbeispiels anhand der einzigen Figur näher dargestellt. Die Figur zeigt eine schematische Anordnung mehrerer Reihen von einzelnen Filtermembranmodulen, die ein Modulrack bilden.

Gemäß Figur bilden insgesamt vier Modulreihen 1a bis 1d ein - nicht weiter dargestelltes - Modulrack. Jede Modulreihe 1a bis 1d besteht aus vier einzelnen Filtermembranmodulen 2. Jedes Filtermembranmodul besitzt ein hohlzylinderförmiges Gehäuse, in welchem ein Bündel von - hier nicht erkennbar - einzelnen stangenförmigen Multibore-Membranen angeordnet ist, durch deren Kapillaren Rohwasser gedrückt wird, um über die poröse Wandung gefiltert zu werden. Zu diesem Zwecke besitzt jedes Filtermembranmodul 2 stirnseitig Zulauf-/Ablaufanschlüsse 3a und 3b, über welche in der Regel die Zuleitung von verunreinigtem Rohwasser erfolgt. Hierbei wird einer der beiden Zulauf-/Ablaufanschlüsse 3a oder 3b als Zulauf gewählt, während der verbleibende Anschluss für die an späterer Stelle noch eingehend erläuterte Rückspülung als Ablauf genutzt wird. Wandseitig jedes Filtermembranmoduls 2 ist ein Ablaufanschluss 4 angeordnet, über den das durch die Multibore-Membranen gefilterte Filtrat austritt. Das Filtrat wird anschließend in einer mit allen Filtermembranmodulen 2 verbundenen Filtratsammelleitung 5 gesammelt und auslassseitig des Racks über ein hier angeordnetes zentrales Filtratventil 6 abgeführt. Die Zulauf-/Ablaufanschlüsse 3 a und 3b jedes Filtermembranmoduls 2 sind dagegen mit zugeordneten Zulauf-/Ablaufleitungen 7a bzw. 7b verbunden. Eingangsseitig des Modulracks wird Rohwasser über eine Umschaltventileinrichtung 8 eingegeben. Dies erfolgt von einem Zentralzulauf 9 aus. An der Umschaltventileinrichtung 8 ist weiterhin ein Ablaufanschluss 10 für verunreinigtes Rückspülwasser vorgesehen. Die Umschaltventileinrichtung 8 ist in diesem Ausführungsbeispiel als 4/2-Wegeventil ausgebildet und gestattet es, den Zulauf von Rohwasser und den Ablauf von verunreinigten Rückspülwasser entweder in die oben liegende Zulauf-/Ablaufleitung 7b oder die unten liegende Zulauf-/Ablaufleitung 7a zu geben.

In die Rohwasser führenden Zulauf-/Ablaufleitungen 7a und 7b sowie die Filtratsammelleitung 5 sind pro Modulreihe 1a bis 1d jeweils Steuerventile 11a bis 11c eingesetzt. Hierbei ist das Steuerventil 11a den jeweils ersten Zulauf-/Ablaufanschlüssen 3a zugeordnet. Das zweite Steuerventil 11b ist den zweiten Zulauf-/Ablaufanschlüssen 3b zugeordnet. Das dritte Steuerventil 11c ist dem Ablaufanschluss 4 für Filtrate zugeordnet. Alle Steuerventile 11a bis 11c sowie auch die Umschaltventileinrichtung 8 und das zentrale Filtratventil 6 sind als elektromagnetische Wegeventile ausgebildet und werden über eine - nicht weiter dargestellte - zentrale elektronische Steuereinheit nach Maßgabe mindestens eines vom Betreiber auszuwählenden Filtrations- und Rückspülmodus koordiniert geschaltet.

Im Filtrationsmodus wird jede Modulreihe 1a bis 1d des Modulracks über die erste Zulauf-/Ablaufleitung 7a mit Rohwasser beaufschlagt. Nach Filtration innerhalb der Filtermembranmodule 2 wird abflussseitig das Filtrat über die Ablaufanschlüsse 4 an den Filtermembranmodulen 2 in der Filtratsammelleitung 5 gesammelt abgeführt und verlässt das Modulrack am zentralen Filtratventil 6. Hierbei werden alle Modulreihen 1a bis 1d zur Filtration genutzt.

Im Rückspülmodus wird im Gegensatz hierzu ein zulaufseitiges Steuerventil 11b einer Modulreihe 1a, welches in der zweiten Zulauf-/Ablaufleitung 7b angeordnet ist, geschlossen. Allerdings ist das zugeordnete ablaufseitige Steuerventil 11 a der zum Ablauf von verunreinigten Rückspülwasser dienenden anderen Zulauf-/Ablaufleitung 7a derselben Modulreihe 1a geöffnet. Die zulaufseitigen Steuerventile in der Rohwasser führenden Zulauf-/Ablaufleitung 7a sind jedoch geöffnet. Das in Folge dessen von diesen Modulreihen 1b bis 1d erzeugte Filtrat wird rückwärts durch die in den Rückspülmodus versetzte erste Modulreihe 1a gepresst, um die hierin angeordnete Filtermembranmodule 2 zu reinigen. Das verunreinigte Rückspülwasser verlässt über die andere Zulauf-/Ablaufleitung 7a und den Ablaufanschluss 10 das Modulrack.

Der Rückspülmodus wird nachfolgend so gesteuert, dass jede der übrigen Modulreihen 1b bis 1d des Modulracks abwechselnd nacheinander rückgespült wird, um zum Ende des Durchlaufs alle Filtrationsmodule modulreihenweise nacheinander gereinigt zu haben.

Die Erfmdung ist nicht beschränkt auf das vorstehend beschriebene Ausführungsbeispiel. Es sind vielmehr auch Abwandlungen hiervon denkbar, welche vom Schutzbereich der nachfolgenden Ansprüche mit umfasst sind. So ist es beispielsweise auch möglich, mehr oder weniger als vier Filtermembranmodule 2 zu einer Modulreihe 1a bis 1 d zusammen zufassen. Die einzelnen Modulreihen 1 a bis 1d können auch eine unterschiedliche Anzahl von Filtermembranmodulen 2, welche zueinander parallel geschaltet sind, aufweisen. Im Rahmen des gesamten Modulracks sind mindestens zwei Modulreihen zu implementieren, damit die erfindungsgemäße Lösung funktioniert. Optimal ist es, wenn im Rückspülmodus das Filtrat mindestens zweier Modulreihen zum Rückspülen einer zu reinigenden Modulreihe genutzt wird.

Die Ventile 11c sind im Übrigen für den normalen Betrieb entbehrlich, können jedoch für den Tausch von Modulen im Reparaturfall vorteilhaft sein.

### Bezugszeichenliste

- 1: Modulreihe
- 2: Filtermembranmodul
- 3: Zulauf-/Ablaufanschluss
- 4: Ablaufanschluss
- 5: Filtratsammelleitung
- 6: Filtratventil
- 7: Zulauf-/Ablaufleitung
- 8: Umschaltventileinrichtung
- 9: Zentralzulauf
- 10: Ablaufanschluss
- 11: Steuerventil

## Patentansprüche

1. Einrichtung zum Rückspülen von Filtermembranmodulen (2), die in Form mehrerer Modulreihen (1a - 1d) parallel geschaltet innerhalb eines Modulracks angeordnet sind und über je stirnseitige Zulauf-/Ablaufanschlüsse (3a, 3b) über je zugeordnete Zulauf-/Ablaufleitungen (7a, 7b) wechselnd mit Rohwasser versorgbar sind, und je einen wandseitigen Ablaufanschluss (4) für das Filtrat aufweisen, an denen eine Filtratsammelleitung (5) zum Abführen des Filtrats angeschlossen ist, wobei Ventilmittel zur Steuerung zumindest eines Filtrations- und Rückspülungsmodus vorgesehen sind, die in jeder Modulreihe (1a-1d) ein zulaufseitiges Steuerventil (11b) einer Rohwasser führenden ersten Zulauf-/Ablaufleitung (7b) und ein zugeordnetes ablaufseitiges Steuerventil (11a) einer zum Ablauf von Rückspülwasser dienenden zweiten Zulauf-/Ablaufleitung (7a) einer Modulreihe sowie eine Umschaltventileinrichtung (8) umfassen, mittels welcher die Rohwasser führende Zulauf-/Ablaufleitung (7a, 7b) der ersten sowie auch der zweiten - an gegenüberliegenden Enden der Filtermembranmodule (2) - stirnseitig angeordneten Zulauf /Ablaufanschlüsse (3a, 3b) mit einem Zentralzulauf (9) für Rohwasser oder mit einem Zentralablauf (10) für Rückspülwasser verbindbar ist, wobei im Rückspülmodus das zulaufseitige Steuerventil (11b) der Rohwasser führenden ersten Zulauf-/Ablaufleitung (7b) einer Modulreihe (1a) geschlossen ist, jedoch das zugeordnete ablaufseitige Steuerventil (11a) der zum Ablauf von Rückspülwasser dienenden zweiten Zulauf-/Ablaufleitung (7a) derselben Modulreihe (1a) sowie die übrigen zulaufseitigen Steuerventile in der Rohwasser führenden Zulaufleitung (7b) der übrigen Modulreihen (1b -1d) geöffnet sind, um eine Rückspülung der einen Modulreihe (1a) des Modulracks durch das gleichzeitig von den anderen Modulreihen (1b - 1d) erzeugte Filtrat zu gewährleisten.

2. Einrichtung nach Anspruch 1,
**dadurch gekennzeichnet, dass** die in die Rohwasser führenden Zulauf-/Ablaufleitungen (7a, 7b) sowie in die Filtratsammelleitung (5) pro Modulreihe (1a-1d) eingesetzten zu- und ablaufseitigen Steuerventile (11a -11c) zur elektronischen Steuerung des Filtrations- und Rückspülungsmodus als elektromagnetisch betätigte 2/2-Wegeventile ausgebildet sind.

3. Einrichtung nach Anspruch 1 oder 2,
**dadurch gekennzeichnet, dass** die Umschaltventileinrichtung (8) als ein elektromagnetisch betätigtes 4/2-Wegeventil ausgebildet ist.

4. Einrichtung nach Anspruch 1,
**dadurch gekennzeichnet, dass** die Filtratsammelleitung (5) endseitig mit einem zentralen Filtratventil (6) versehen ist.

5. Einrichtung nach einem der vorstehenden Ansprüche,
**dadurch gekennzeichnet, dass** eine zentrale elektronische Steuereinheit vorgesehen ist, mittels welcher die Umschaltventileinrichtung (8), das zentrale Filtratventil (6) sowie die in die Zulauf /Ablaufleitungen (7a, 7b) und die Filtratsammelleitung (5) eingesetzten Steuerventile (11a-11c) nach Maßgabe mindestens eines Filtrations- und Rückspülungsmodus koordiniert schaltbar sind.

6. Verfahren zum Rückspülen von Filtermembranmodulen (2), die zu mehreren Modulreihen (1a - 1d) parallel geschaltet innerhalb eines Modulracks angeordnet werden und über je stirnseitige Zulauf /Ablaufanschlüsse (3a, 3b) über je zugeordnete Zulauf-/Ablaufleitungen (7a, 7b) wechselnd mit Rohwasser versorgt werden, und je einen wandseitigen Ablaufanschluss (4) für das Filtrat aufweisen, an denen eine Filtratsammelleitung (5) zum Abführen des Filtrats angeschlossen ist, wobei ventilgesteuert zumindest ein Filtrations- und Rückspülungsmodus durchgeführt werden und wobei
im Rückspülmodus ein zulaufseitiges Steuerventil (11b) der Rohwasser führenden ersten Zulauf-/Ablaufleitung (7b) einer Modulreihe (1a) geschlossen wird, jedoch ein zugeordnetes ablaufseitiges Steuerventil (11a) der zum Ablauf von Rückspülwasser dienenden zweiten Zulauf-/Ablaufleitung (7a) derselben Modulreihe (1a) sowie die übrigen zulaufseitigen Steuerventile in der Rohwasser führenden Zulaufleitung (7b) der übrigen Modulreihen (1b - 1d) geöffnet werden, um eine Rückspülung der einen Modulreihe (1a) des Modulracks durch das gleichzeitig von den anderen Modulreihen (1b - 1d) erzeugte Filtrat zu gewährleisten, wobei das Rückspülen wechselseitig im Modul ausgeführt wird, indem mittels einer Umschaltventileinrichtung (8) die Rohwasser führende Zulauf-/Ablaufleitung (7a, 7b) der ersten sowie auch der zweiten - an gegenüberliegenden Enden der Filtermembranmodule (2) - stirnseitig angeordneten Zulauf-/Ablaufanschlüssen (3a, 3b) mit einem Zentralzulauf (9) für Rohwasser oder mit einem Zentralablauf (10) für Rückspülwasser verbunden wird.

7. Verfahren nach Anspruch 6,
**dadurch gekennzeichnet, dass** im Rückspülungsmodus jede Modulreihe (1a - 1d) des Modulracks abwechselnd nacheinander rückgespült wird, um alle Filtermembranmodule (2) zu reinigen.

8. Verfahren nach Anspruch 6,
**dadurch gekennzeichnet, dass** im Filtrationsmodus jede Modulreihe (1a - 1d) des Modulracks über eine der Zulauf-/Ablaufleitungen (7a, 7b) mit Rohwasser beaufschlagt wird, und dass abflussseitig das Filtrat über die Filtratsammelleitung (5) abgeführt wird.

## Claims

1. An apparatus for backwashing filter membrane modules (2), which are arranged in parallel within a module rack in the form of a plurality of module rows (1a - 1 d) and alternately able to be supplied with raw water by means of supply/drain ports (3a, 3b) at each end face via respectively associated supply/drain lines (7a, 7b), and each have a drain port (4) at a wall side for the filtrate, to which a filtrate collection line (5) is connected for draining the filtrate, wherein valve means are provided for controlling at least one filtration and rewashing mode, comprising, in each module row (1a-1d), a supply-side control valve (11 b) of a first supply/drain line (7b) carrying raw water and an associated drain-side control valve (11 a) of a second supply/drain line (7a) of a module row serving to drain backwash water, and a switchover valve apparatus (8), by means of which the raw water-carrying supply/drain line (7a, 7b) of the first as well as the second supply/drain ports (3a, 3b) arranged at the end face - at opposite ends of the filter membrane module (2) - is connectable with a central intake (9) for raw water or with a central drain (10) for backwash water, wherein, in the backwashing mode, the supply-side control valve (11 b) of the raw-water carrying first supply/drain line (7b) of a module row (1 a) is closed, but the associated drain-side control valve (11 a) of the second supply/drain line (7a) of the same module row (1 a) serving to drain backwash water as well as the remaining supply-side control valves in the raw-water carrying supply line (7b) of the remaining module rows (1b - 1d) are open, to ensure backwashing of the one module row (1 a) of the module rack by the filtrate simultaneously produced by the other module rows (1 b - 1d).

2. The apparatus according to claim 1,
**characterized in that** the supply- and drain-side control valves (11a - 11c) installed per module row (1a - 1d) in the raw-water carrying supply/drain lines (7a, 7b) as well as the filtrate collection line (5) are configured for the electronic control of the filtration and backwashing mode of the electromagnetically operated two-way/two-position directional control valve.

3. The apparatus according to claim 1 or 2,
**characterized in that** the switchover valve apparatus (8) is configured as an electromagnetically operated four-way/two-position directional control valve.

4. The apparatus according to claim 1,
**characterized in that** the filtrate collection line (5) is provided with a central filtrate valve (6) at its end.

5. The apparatus according to any one of the preceding claims,
**characterized in that** a central electronic control unit is provided by means of which the switchover valve apparatus (8), the central filtrate valve (6) as well as control valves (11a -11c) installed in the supply/drain lines (7a, 7b) and the filtrate collection line (5) are switchable in a coordinated fashion under the control of at least one filtration and backwashing mode.

6. A method for backwashing filter membrane modules (2), which are arranged in parallel within a module rack in a plurality of module rows (1a - 1 d) and alternately supplied with raw water by means of supply/drain ports (3a, 3b) at each end face via respectively associated supply/drain lines (7a, 7b), and each having a drain port (4) at a wall side for the filtrate, to which a filtrate collection line (5) is connected for draining the filtrate, wherein at least one filtration and backwashing mode is carried out under valve control and wherein
in the backwashing mode, a supply-side control valve (11 b) of the raw-water carrying first supply/drain line (7b) of one module row (1 a) is closed, but an associated drain-side control valve (11 a) of the second supply/drain line (7a) of the same module row (1 a) serving to drain backwash water as well as the remaining supply-side control valves in the raw-water carrying supply line (7b) of the remaining module rows (1b - 1 d) are opened, to ensure backwashing of the one module row (1 a) of the module rack by the filtrate simultaneously produced by the other module rows (1b - 1 d), wherein backwashing is alternately performed in the module by connecting the raw water-carrying supply/drain line (7a, 8b) of the first as well as the second supply/drain ports (3a, 3b) arranged at the end face - at opposite ends of the filter membrane module (2) - with a central intake (9) for raw water or with a central drain (10) for backwash water by means of a switchover valve apparatus (8).

7. The method according to claim 6,
**characterized in that**, in the backwashing mode, each module row (1a - 1d) of the module rack is alternately successively backwashed to clean all filter membrane modules (2).

8. The method according to claim 6,
**characterized in that**, in the filtration mode, raw water is applied to each module row (1a -1d) of the module rack via one of the supply/drain lines (7a, 7b) and **in that** the filtrate is drained via the filtrate collection line (5) on the drain side.

## Revendications

1. Système pour le lavage à contre-courant de modules à membrane (2), qui sont agencés à l'intérieur d'un tiroir-module en étant branchés en parallèle sous la forme de plusieurs rangées de modules (1a-1d) et qui peuvent être alimentés avec de l'eau brute en alternance via des conduites associées (7a, 7b) d'amenée/d'évacuation via des raccords respectifs (3a, 3b) d'amenée/d'évacuation du côté frontal, et qui comprennent un raccord d'évacuation (4) côté paroi pour le filtrat, raccord auquel est branchée une conduite de collecte de filtrat (5) pour l'évacuation du filtrat, dans lequel il est prévu des moyens formant vanne pour commander au moins un mode de filtration et un mode de lavage à contre-courant, ces moyens comprenant dans chaque rangée de modules (1a-1d) une vanne de commande côté amenée (11b) d'une première conduite d'amenée/d'évacuation (7b) qui mène l'eau brute, et une vanne de commande associée (11a) côté évacuation d'une seconde conduite d'amenée/d'évacuation (7a) qui sert à l'évacuation de l'eau de lavage à contre-courant dans une rangée de modules, ainsi qu'un système de vanne d'inversion (8) au moyen duquel la conduite d'amenée/d'évacuation (7a, 7b) qui mène l'eau brute des premiers ainsi que des seconds raccords d'amenée/d'évacuation (3a, 3b), agencés du côté frontal aux extrémités opposées des modules de membrane filtrante (2), est susceptible d'être reliée à une amenée centrale (9) pour l'eau brute ou à une évacuation centrale (10) pour l'eau de lavage à contre-courant, dans lequel, dans le mode de lavage à contre-courant, la vanne de commande côté amenée (11b) de la première conduite d'amenée/d'évacuation (7b), qui mène l'eau brute, d'une rangée de modules (1a) est fermée, mais dans lequel la vanne de commande associée (11a), côté évacuation, de la seconde conduite d'amenée/d'évacuation (7a), qui sert à l'évacuation de l'eau de lavage à contre-courant, dans la même rangée de modules (1a), ainsi que les autres vannes de commande côté amenée, dans la conduite d'amenée (7b), qui mène l'eau brute, des autres rangées de modules (1b-1d) sont ouvertes, afin de garantir un lavage à contre-courant d'une rangée de modules (1a) du tiroir-module par le filtrat engendré simultanément par les autres rangées de modules (1b-1d).

2. Système selon la revendication 1,
**caractérisé en ce que** les vannes de commande côté amenée et côté évacuation (11a-11c) intégrées dans les conduites d'amenée/d'évacuation (7a, 7b) qui mènent l'eau brute ainsi que dans la conduite de collecte de filtrat (5) pour chaque rangée de modules (1a-1d) sont réalisées pour une commande électronique du mode de filtration et du mode de lavage à contre-courant, sous la forme de vannes à 2 voies/2 positions actionnées de manière électromagnétique.

3. Système selon la revendication 1 ou 2,
**caractérisé en ce que** le système de vanne d'inversion (8) est réalisé sous forme de vanne à 4 voies/2 positions actionnée de manière électromagnétique.

4. Système selon la revendication 1,
**caractérisé en ce que** la conduite de collecte de filtrat (5) est pourvue à son extrémité d'une vanne centrale à filtrat (6).

5. Système selon l'une des revendications précédentes,
**caractérisé en ce qu'**il est prévu une unité de commande électronique centrale au moyen de laquelle le système de vanne d'inversion (8), la vanne centrale à filtrat (6) ainsi que les vannes de commande (11a-11c) intégrées dans les conduites d'amenée/d'évacuation (7a, 7b) et dans la conduite de collecte de filtrat (5) sont susceptibles d'être commutés de façon coordonnée selon les dispositions d'au moins un mode de filtration et un mode de lavage à contre-courant.

6. Procédé pour le lavage à contre-courant de modules de membrane filtrante (2), qui sont agencés à l'intérieur d'un tiroir-module en étant branchés en parallèle sous la forme de plusieurs rangées de modules (1a-1d) et qui peuvent être alimentés avec de l'eau brute en alternance via des conduites associées (7a, 7b) d'amenée/d'évacuation via des raccords respectifs (3a, 3b) d'amenée/d'évacuation du côté frontal, et qui comprennent un raccord d'évacuation (4) côté paroi pour le filtrat, raccord auquel est branchée une conduite de collecte de filtrat (5) pour l'évacuation du filtrat,
dans lequel on exécute au moins un mode de filtration et un mode de lavage à contre-courant sous la commande de vannes, et
dans lequel, dans le mode de lavage à contre-courant, on ferme une vanne de commande (11b) côté amenée, de la première conduite d'amenée/d'évacuation (7b), qui mène l'eau brute, d'une rangée de modules (1a), mais on ouvre une vanne de commande associée (11a), côté évacuation, de la seconde conduite d'amenée/d'évacuation (7a), qui sert à l'évacuation de l'eau de lavage à contre-courant, de la même rangée de modules (1a), ainsi que les autres vannes de commande côté amenée dans la conduite d'amenée (7b), qui mène l'eau brute, des autres rangées de modules (1b-1d), afin de garantir un lavage à contre-courant d'une rangée de modules (1a) du tiroir-module par le filtrat engendré simultanément par les autres rangée de modules (1b-1d), dans lequel le lavage à contre-courant est exécuté alternativement dans le module du fait que l'on relie, au moyen d'un système à vanne d'inversion (8), la conduite d'amenée/d'évacuation (7a, 7b), qui mène l'eau brute, des premiers et des seconds raccords d'amenée/d'évacuation (3a, 3b), agencés de côté frontal aux extrémités opposées des modules de membrane filtrante (2), à une amenée centrale (9) pour l'eau brute ou à une évacuation centrale (10) pour l'eau de lavage à contre-courant.

7. Procédé selon la revendication 6,
**caractérisé en ce que** dans le mode de lavage à contre-courant, chaque rangée de modules (1a-1d) du tiroir-module est lavée à contre-courant en alternance les unes après les autres, afin de nettoyer tous les modules de membrane filtrante (2).

8. Procédé selon la revendication 6,
**caractérisé en ce que** dans le mode de filtration, chaque rangée de modules (1a-1d) du tiroir-module est alimentée avec de l'eau brute via l'une des conduites d'amenée/d'évacuation (7a, 7b), et **en ce que** le filtrat est évacué, côté évacuation, via la conduite de collecte de filtrat (5).
